# EUROPÄISCHE PATENTSCHRIFT

(11) **EP 2 545 301 B1**
(45) Veröffentlichungstag und Bekanntmachung des Hinweises auf die Patenterteilung: **18.03.2015**
(21) Anmeldenummer: 11741520.8
(22) Anmeldetag: 26.07.2011
(51) Int. Cl.: F16H 57/04, F16H 57/027, F16H 57/02

(54) **ZAHNRADGETRIEBE**
GEAR TRAIN
ENGRENAGE

(30) Priorität: 02.09.2010 DE 102010036141
(43) Veröffentlichungstag der Anmeldung: 16.01.2013
(73) Patentinhaber: Voith Patent GmbH, 89522 Heidenheim (DE)
(72) Erfinder: VON WILMOWSKY, Kaspar, Freiherr, 86609 Donauwörth (DE); FUCHS, Andreas, 87459 Pfronten-Ried (DE); KUNZE, Jens, 87541 Bad Hindelang (DE)
(74) Vertreter: Dr. Weitzel & Partner
(86) Internationale Anmeldenummer: PCT/EP2011/003731
(87) Internationale Veröffentlichungsnummer: WO 2012/028231

(56) Entgegenhaltungen:
- WO-A1-2004/040170
- DE-U1- 29 908 542
- FR-A- 415 319
- JP-A- 2000 274 518
- US-A- 1 912 422
- US-A- 5 085 100

## Beschreibung

Die Erfindung betrifft ein Zahnradgetriebe mit zwei oder mehreren, jeweils miteinander in Eingriff stehenden Zahnrädern. Weitere Elemente eines solchen Getriebes sind Wellen, Lager sowie ein Gehäuse. Solche Zahnradgetriebe sind flüssigkeitsgeschmiert, im Allgemeinen ölgeschmiert.

Besonders bei hochtourigen Getrieben zum Beispiel bei Turbo- oder Bahngetrieben, werden erhebliche Mengen des die Zahnräder umgebenden Mediums im Getriebegehäuse turbulent bewegt und umgewälzt. Hierbei handelt es sich in der Regel um ein Zweiphasengemisch aus Luft und ÖI mit einem deutlich höheren Luftvolumenanteil.

Um die Zahnkontakte hauptsächlich zu kühlen, aber auch um einen Ölfilm/Schmierfilm zwischen den Kontaktpartnern aufrecht zu erhalten, werden die Zahnräder mit einer Öleinspritzung versehen.

Dabei entsteht, in Abhängigkeit von der Öleinspritzung, sowohl eine Druckdifferenz zwischen Zahneingriff und Zahnaustritt ohne merklichen Einfluss auf Ventilationsverluste als auch eine Förderwirkung auf das umgebende Medium in Abhängigkeit von der Umfangsgeschwindigkeit an der Verzahnung.

Bei den üblichen Getrieben bedeutet das genannte Umwälzen des Mediums einen erheblichen Energieverlust durch Ventilation, kurz Ventilationsverluste.

Zahnradpumpen bestehen in der Regel aus zwei ineinander kämmenden Zahnrädern gleicher Zähnezahl, welche eine extrem eng anliegende Hüllwand um die Zahnräder mit einem Einlass im Zahnaustritt und einen Auslass im Zahneintritt aufweisen. Durch die eng anliegende Hüllwand baut sich ein Differenzdruck zwischen Zahnaustritt und Zahneintritt auf. Sie dienen dem Zweck, ein flüssiges Medium vom Einlass zum Auslass zu fördern.

Im Vergleich zu Zahnradpumpen haben übliche, hochtourige Stirnradgetriebe zur Übertragung hoher Leistung verhältnismäßig große Lagerspiele und auf Grund der Bauteilevielfalt lange Toleranzketten. Daher ist es nicht möglich, ein übliches, hochtouriges Stirnradgetriebe effektiv als Zahnradpumpe, insbesondere zur Förderung von gasförmigen Medien, ohne spezielle Dichtungsmaßnahmen zu nutzen, weil sich zu große Spalte ergeben.

Es ist bekannt, durch Anlegen eines Unterdruckes an das Getriebegehäuse Getriebe zu besaugen. Hierzu sind besondere Aufwendungen notwendig, zum Beispiel Pumpen, zusätzliche Verrohrungen, etc. Dieses System ist jedoch teuer und störanfällig. Ebenso ist bekannt, dass entsprechende Sicherungsmaßnahmen zu ergreifen sind, wenn im Getriebegehäuse nicht genügend Unterdruck erzeugt werden kann.

Das Dokument FR415319 zeigt ein flüssigkeitgeschmiertes Zahnradgetriebe mit den Merkmalen des Oberbegriffs des Anspruchs 1.

Der Erfindung liegt die Aufgabe zugrunde, ein Getriebe anzugeben, bei dem die Ventilationsverluste minimiert oder beseitigt sind.

Diese Aufgabe wird durch die gekennzeichneten Merkmale von Anspruch 1 gelöst.

Hieraus ergeben sich die folgenden Vorteile:
- Die Ventilationsverluste werden vermindert oder vermieden.
- Der Wirkungsgrad des Getriebes ist höher und die Verlustleistung demgemäß niedriger.
- Die Vorteile werden mit minimalem Bauaufwand erreicht.
- Es gibt keine Bedienungs- oder Wartungsprobleme.
- Es gibt keine zusätzlich notwendigen Sicherheitssysteme oder -maßnahmen.
- Es müssen keine externen Aufwendungen zur Unterdruckerzeugung vorgenommen werden.

Die Hüllwand kann auch über ein Medium, zum Beispiel Wasser, durch Kühlkanäle in einem Wasserkreislauf gekühlt werden. Dadurch kann die erforderliche Ölmenge zur Kühlung der Zahnräder weiter reduziert und die Ventilationsverluste verringert werden.

Die Erfindung ist anhand der Zeichnung näher erläutert. Darin ist im Einzelnen folgendes dargestellt:
- Figur 1: zeigt ein Getriebe mit zwei Zahnrädern, eine diese beiden vollständig umschließenden Hüllwand sowie eine Unterdruckkammer und eine Überdruckkammer.
- Figur 2: zeigt ein Getriebe ähnlich jenem gemäß Figur 1, jedoch ohne Überdruckkammer.
- Figur 3: zeigt ein Getriebe ähnlich jenem gemäß Figur 1, jedoch ohne Unterdruckkammer und ohne Überdruckkammer.
- Figur 4: zeigt ein Getriebe ähnlich gemäß jenem Figur 3, jedoch mit getrennten Hüllwänden für die beiden Zahnräder.
- Figur 5: zeigt ein Zahnradgetriebe mit einem Zentralrad und drei Ritzeln, ferner mit einer Überdruckkammer.
- Figur 6: zeigt zwei Zahnräder mit einer Hüllwand, die schwenkbare Klappen aufweist.
- Figur 7: zeigt ein Getriebe in einem Zylinderschnitt mit zwei Zahnrädern.
- Figur 8: ist eine Ringbrause zum Einspritzen von Öl im Bereich des Austrittes.
- Figur 9: veranschaulicht die Öleinspritzung mittels einer Ringbrause gemäß Figur 8.
- Figuren 10 und 11: zeigen berührungslose Dichtungen.

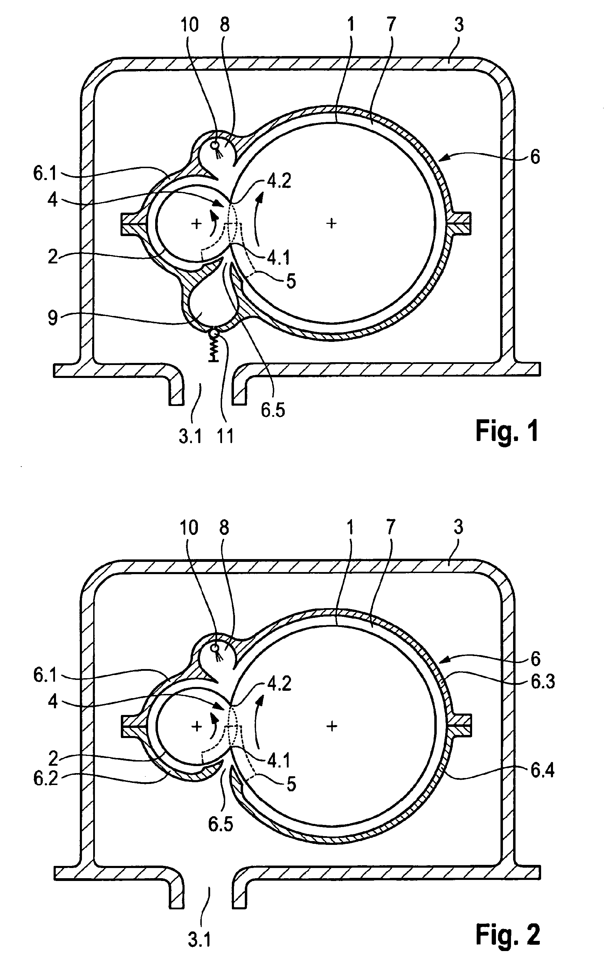

Das in Figur 1 gezeigte Getriebe umfasst ein erstes Zahnrad 1 und ein zweites Zahnrad 2 sowie ein Gehäuse 3. Das Gehäuse 3 hat einen Ölablauf 3.1.

Die beiden Zahnräder 1 und 2 kämmen miteinander und bilden einen Eingriffsbereich 4 der Zähne. Der Eingriffsbereich weist einen Eintritt 4.1 und einen Austritt 4.2 auf. Der Eingriffsbereich 4 ist durch Dichtungen 5 abgedeckt.

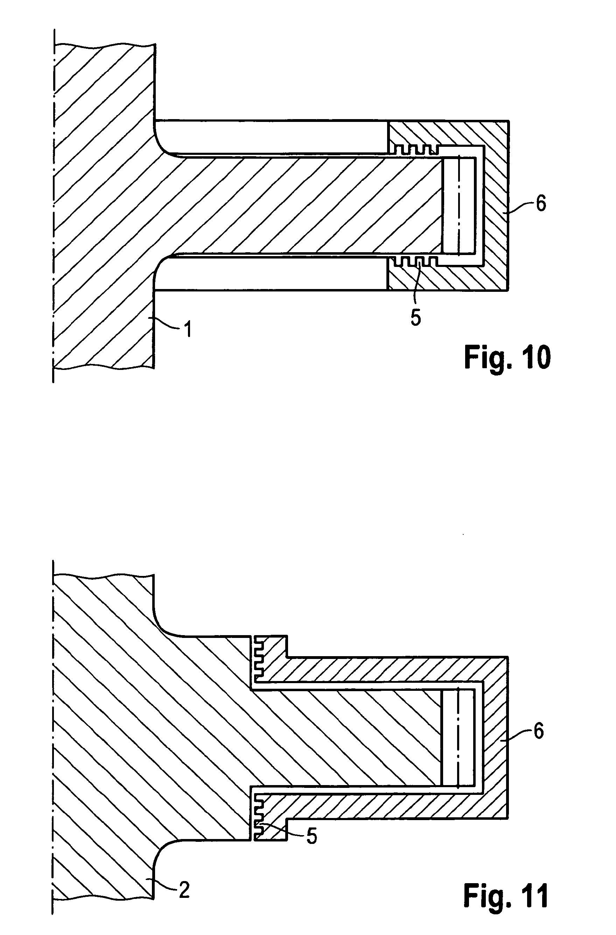

Laufen die beiden Zahnräder um, so wie durch die gebogenen Pfeile dargestellt, so bildet sich im Bereich des Austrittes 4.2 ein Unterdruck, und im Bereich des Eintrittes 4.1 ein Überdruck. Die Dichtung beziehungsweise Dichtungen 5 dichten reibungsarm den Überdruckraum ab. Die Abdichtung kann axial oder radial erfolgen, beispielsweise durch berührungslose Labyrinthdichtungen - siehe die Figuren 10 und 11. Es ist eine Hüllwand 6 vorgesehen, die die beiden Zahnräder eng umschließt. Zwischen den Kopfkreisen der Zahnräder 1, 2 und der Hüllwand 6 ist ein enger Spalt 7 gebildet. Die Weite des Spaltes 7 kann beispielsweise gleich der Zahnhöhe sein, das heißt der radialen Erstreckung eines jeden Zahnes. Er kann auch ein mehrfaches der Zahnhöhe aufweisen, beispielsweise zwischen der halben Zahnhöhe und dem fünffachen der Zahnhöhe liegen.

Die Hüllwand 6 umfasst zwei Teilwände 6.1 und 6.2. Teilwand 6.1 bildet im Austrittsbereich des Eingriffes eine Unterdruckkammer 8.

In der Unterdruckkammer 8 ist eine Öldüse 10 vorgesehen, und an der Überdruckkammer 9 ein Überdruckventil 11. Das Öl aus der Öldüse 10 dient zum Schmieren und Kühlen des Systems. Dabei wirkt sich der Unterdruck im Unterdruckraum 8 günstig auf die Ölförderung durch die Öldüse 10 aus.

Das Überdruckventil 11 im Überdruckraum 9 öffnet sich bei Überschreiten eines bestimmten Differenzdruckes zwischen Überdruckraum 9 und dem übrigen, vom Gehäuse 3 umschlossenen Innenraum. Die Dichtungsleckagen, die Ölzufuhr, der Überdruckventildurchfluss und die Druckdifferenz sind derart aufeinander abgestimmt, dass die aus der Öldüse 10 eingespritzte Ölmenge durch das Überdruckventil 11 in den Getriebeinnenraum strömt und aus dem Ölablauf 3.1 den Getriebe-Innenraum verlässt, um gekühlt, filtriert und im Kreislauf wiederum der Öldüse 10 zugeführt zu werden.

Das Getriebe gemäß Figur 2 weist eine Hüllwand 6 auf, die aus drei Hüllwänden 6.1, 6.2 und 6.3 aufgebaut ist. Man erkennt wiederum die Unterdruckkammer 8, die Öldüse 10 und die Dichtungen 5. Es fehlt jedoch an einer Überdruckkammer.

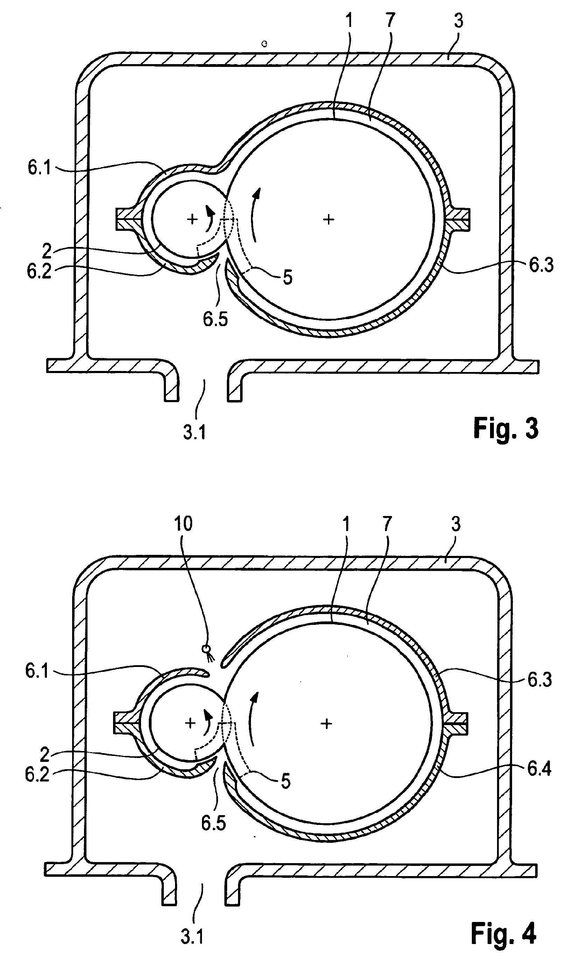

Das Getriebe gemäß Figur 3 ist ähnlich wie das gemäß Figur 2 gestaltet. Jedoch fehlt hier nicht nur die Unterdruckkammer, sondern auch die Überdruckkammer. Eine Öldüse ist nicht vorgesehen.

Bei dem Getriebe gemäß Figur 4 ist weder eine Unterdruckkammer noch eine Überdruckkammer vorhanden, jedoch eine Öldüse 10.

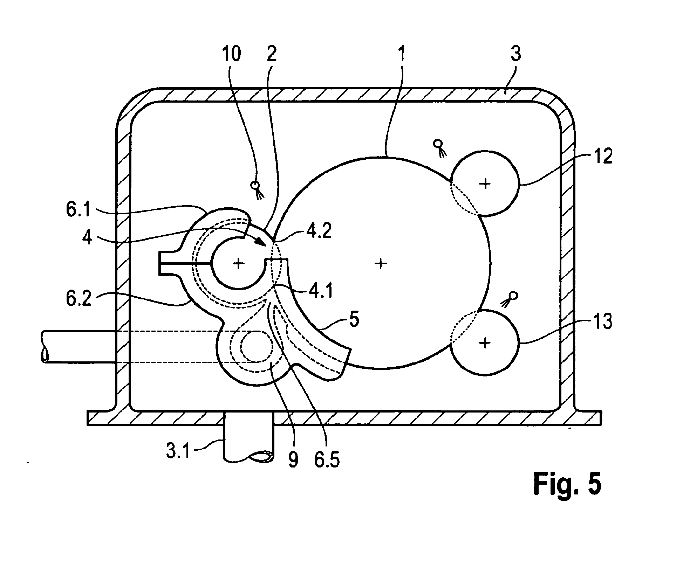

Das Getriebe gemäß Figur 5 weist ein Zentralrad 1 auf, das mit einem Ritzel 2 kämmt. Es weist ferner zwei Ritzel 12 und 13 auf.

Dem Zentralrad 1 und dem Ritzel 2 ist wiederum eine Hüllwand 6 zugeordnet, im vorliegenden Falle bestehend aus zwei Teilwänden 6.1 und 6.2.

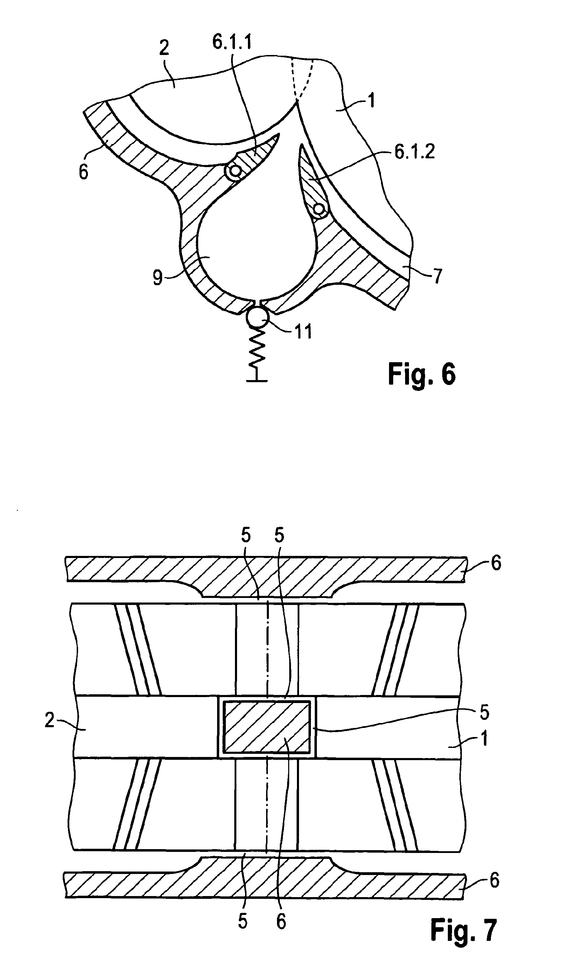

Figur 6 lässt eine interessante Ausführungsform erkennen. Dabei sind zwei Schwenkklappen 6.1.1 und 6.1.2 vorgesehen. Diese erlauben es, auf die Weite der radialen Dichtspalte zwischen Hüllwand 6 und Kopfkreisdurchmesser der Zahnräder Einfluss zu nehmen. Hierdurch können Fertigungstoleranzen ausgeglichen und die Arbeitsweise verändert werden. Die Pumpwirkung des Systems kann dadurch verändert werden.

Figur 7 zeigt ein Getriebe mit Doppelschrägverzahnung. Es sind an den Flächen einer Doppelschrägverzahnungslücke Dichtungen 5 vorgesehen.

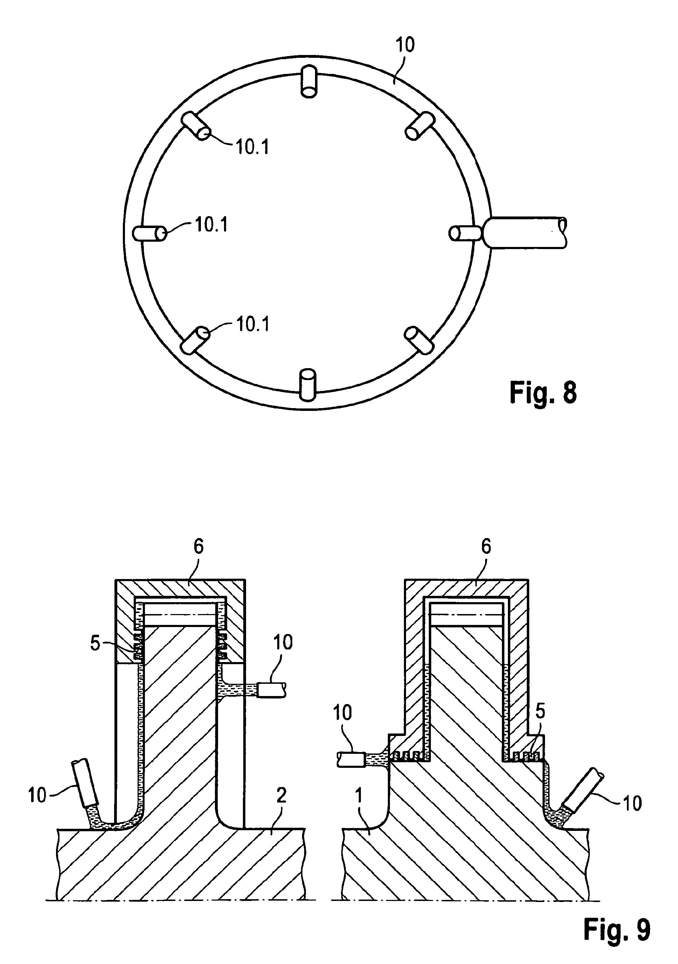

Die in Figur 8 gezeigte Öldüse 10 ist ringförmig. Sie weist mehrere Düsen 10.1 auf.

Figur 9 veranschaulicht Anordnung und Wirkungsweise der Öldüse 10.

Die Figuren 10 und 11 zeigen Ausführungsbeispiele von Dichtungen.

### Bezugszeichenliste

- 1: Zahnrad
- 2: Zahnrad
- 3: Gehäuse
- 3.1: Ölablauf
- 4: Eingriffsbereich
- 4.1: Eintritt
- 4.2: Austritt
- 5: Dichtung
- 6: Hüllwand
- 6.1: Teilwand
- 6.1.1/6.1.2: Schwenkklappe
- 6.2: Teilwand
- 6.3: Teilwand
- 6.4: Teilwand
- 6.5: Auslass
- 7: Spalt
- 8: Unterdruckraum
- 9: Überdruckraum
- 10: Ölbrause
- 10.1: Düse
- 11: Überdruckventil
- 12: Ritzel
- 13: Ritzel

## Patentansprüche

1. Flüsslgkeitsgeschmiertes Zahnradgetriebe mit den folgenden Merkmalen:
1.1 mit wenigstens zwei Zahnrädern (1, 2), deren Zähne miteinander kämmen;
1.2 mit einem Eingriffsbereich (4), der einen Eintritt (4.1) und einen Austritt (4.2) aufweist;
1.3 mit einer Hüllwand (6), die die zwei miteinander zusammenarbeitenden Zahnräder umschließt und den umschlossenen Innenraum, partiell oder vollkommen gegen die Umgebung absperrt;
1.4 die Hüllwand (6) weist im Bereich des Eintritts (4.1) einen Auslass (6.5) auf, der eine leitende Verbindung zwischen dem Innenraum und der Atmosphäre herstellt;
1.5 der Abstand zwischen dem Flugkreis der Zahnräder und der Hüllwand (6) ist kleiner, als die Zahnhöhe; **dadurch gekennzeichnet, dass**
1.6 im Bereich des Eintrittes (4.1) eine Überdruckkammer (9) und im Bereich des Austritts (4.2) eine Unterdruckkammer (8) vorgesehen ist; und
1.7 die Überdruckkammer (9) ein Überdruckventil (11) aufweist, wobei ein Außengehäuse (3) mit einem Ölablauf (3.1) vorgesehen ist, das die Zahnräder (1, 2) und die Hüllwand (6) umschließt; und
1.8 in der Unterdruckkammer (8) eine Öldüse (10) vorgesehen Ist, sodass Öl aus der Öldüse (10) zum Schmieren und Kühlen des Zahnradgetriebes dient; wobei
1.9 das Überdruckventil (11) derart ausgeführt ist, dass es sich beim Überschreiten eines bestimmten Differenzdruckes zwischen Überdruckkammer (9) und dem übrigen, vom Außengehäuse (3) umschlossenen Innenraum öffnet und eine aus der Öldüse (10) eingespritzte Ölmenge durch das Überdruckventil (11) In den Getriebeinnenraum strömt und aus dem Ölablauf (3.1) den Getriebeinnenraum verlässt, um in einem Kreislauf wiederum der Öldüse (10) zugeführt zu werden.

2. Zahnradgetriebe nach Anspruch 1, **dadurch gekennzeichnet, dass** die Verbindung zwischen Innenraum und Atmosphäre eine unmittelbare ist.

3. Zahnradgetriebe nach Anspruch 1 oder 2, **dadurch gekennzeichnet, dass** die Ölbrause (10) im Bereich des Eintritts (4.1) und/oder des Austrittes (4.2) mit einer Düse zum Zuführen von Schmiermittel zu den Zähnen vorgesehen ist.

4. Zahnradgetriebe nach einem der Ansprüche 1 bis 3, **dadurch gekennzeichnet, dass** die Hüllwand (6) aus Kunststoff oder Metall besteht

5. Zahnradgetriebe nach Anspruch 1, **dadurch gekennzeichnet, dass** der Ölablauf (3.1) drucklos ist.

6. Zahnradgetriebe nach einem der Ansprüche 1 bis 5, **dadurch gekennzeichnet, dass** die Zahnräder mit einer Doppel-Schrägverzahnung ausgestattet sind.

7. Zahnradgetriebe nach einem der Ansprüche 1 bis 5, **dadurch gekennzeichnet, dass** im Innenraum eine Dichtung (5) zwischen dem Eintritt (4.1) und dem Austritt (4.2) vorgesehen ist.

8. Zahnradgetriebe nach Anspruch 6, **dadurch gekennzeichnet, dass** die Dichtung (5) eine Bürstendichtung ist.

9. Zahnradgetriebe nach Anspruch 1, **dadurch gekennzeichnet, dass** die Hüllwand (6) über Kühlkanäle verfügt, die von einem Medium eines Kühlkreislaufs zur Abfuhr von Wärme durchströmt werden.

10. Zahnradgetriebe gemäß Anspruch 9, **dadurch gekennzeichnet, dass** das Medium Wasser ist.

11. Zahnradgetriebe nach Anspruch 1, **dadurch gekennzeichnet, dass** der Innenraum besaugt ist.

## Claims

1. A fluid-lubricated gear train, comprising the following features:
1.1 with at least two gearwheels (1, 2) whose teeth mesh with each other;
1.2 with a meshing region (4) which comprises an entrance (4.1) and an exit (4.2);
1.3 with a casing wall (6) which encloses the two mutually cooperating gearwheels and partially or fully blocks off the enclosed interior space against the ambient environment;
1.4 the casing wall (6) comprises an outlet (6.5) in the region of the entrance (4.1) which produces a conductive connection between the interior space and the atmosphere;
1.5 the distance between the tip circle of the gearwheels and the casing wall (6) is smaller than the tooth height, **characterized in that**
1.6 an overpressure space (9) being provided in the region of the entrance (4.1) and a negative-pressure space (8) being provided in the region of the exit (4.2), and
1.7 the overpressure chamber (9) having a pressure-relief valve (11), with an external housing (3) being provided with an oil drain (3.1), said housing enclosing the gearwheels (1, 2) and the casing wall (6), and
1.8 an oil nozzle (10) is provided in the negative-pressure space (8), so that oil from the oil nozzle (10) is used for lubricating and cooling the gear train, with
1.9 the pressure-relief valve (11) being arranged in such a way that it will open upon exceeding a specific differential pressure between the overpressure space (9) and the remaining interior space enclosed by the external housing (3), and an oil quantity injected from the oil nozzle (10) will flow through the pressure-relief valve (11) into the interior space of the gear and will leave the interior space of the gear via the oil drain (3.1) in order to be supplied in a circuit to the oil nozzle (10) again.

2. A gear train according to claim 1, **characterized in that** the connection between the interior space and the atmosphere is a direct one.

3. A gear train according to claim 1 or 2, **characterized in that** the oil shower (10) is provided in the region of the entrance (4.1) and/or the exit (4.2) with a nozzle for supplying lubricant to the teeth.

4. A gear train according to one of the claims 1 to 3, **characterized in that** the casing wall (6) consists of plastic or metal.

5. A gear train according to claim 1, **characterized in that** the oil drain (3.1) is pressureless.

6. A gear train according to one of the claims 1 to 5, **characterized in that** the gearwheels are provided with a double-helical gearing.

7. A gear train according to one of the claims 1 to 5, **characterized in that** a seal (5) is provided in the interior space between the entrance (4.1) and the exit (4.2).

8. A gear train according to claim 6, **characterized in that** the seal (5) is a brush seal.

9. A gear train according to claim 1, **characterized in that** the casing wall (6) comprises cooling channels through which a medium of a cooling circuit flows for the dissipation of heat.

10. A gear train according to claim 9, **characterized in that** the medium is water.

11. A gear train according to claim 1, **characterized in that** interior space is aspirated.

## Revendications

1. Engrenage à lubrification hydraulique présentant les caractéristiques suivantes:
1.1 au moins deux roues dentées (1, 2), dont les dents s'engrènent l'une avec l'autre;
1.2 une zone d'engrènement (4), présentant une entrée (4.1) et une sortie (4.2);
1.3 une paroi enveloppante (6), qui entoure au moins une des deux roues dentées en interaction l'une avec l'autre et qui isole partiellement ou complètement de l'environnement l'espace intérieur entouré;
1.4 la paroi enveloppante (6) présente dans la zone de l'entrée (4.1) une sortie (6.5) qui produit une communication conductrice entre l'espace intérieur et l'atmosphère;
1.5 la distance entre le cercle décrit par les roues d'engrenage et la paroi enveloppante (6) est inférieure à la hauteur des dents ; **caractérisé en ce que**:
1.6 une chambre de surpression (9) est prévue dans la zone de l'entrée (4.1) et une chambre de dépression (6) est prévue dans la zone de sortie (4.2);
1.7 la chambre de surpression (9) présente une soupape de surpression (11), où un carter extérieur (3) est pourvu d'une sortie d'huile (3.1) qui entoure les roues dentées (1, 2) et la paroi enveloppante (6); et
1.8 une buse d'huile (10) est prévue dans la chambre de dépression (8) de sorte que l'huile sortant de la buse d'huile (10) sert à graisser et refroidir l'engrenage; où
1.9 la soupape de surpression (11) est conçue de telle sorte qu'elle s'ouvre en cas de dépassement d'une certaine pression différentielle entre la chambre de surpression (9) et le reste de l'espace interne entouré par le carter extérieur (3), et une quantité d'huile pulvérisée à partir de la buse d'huile (10) s'écoule dans l'espace intérieur de l'engrenage par le biais de la soupape de surpression (11) et puisse sortir de espace intérieur de l'engrenage en passant par la sortie d'huile (3.1) pour être réacheminée à la buse d'huile (10) dans un circuit.

2. Engrenage selon la revendication 1, **caractérisé en ce que** la communication entre l'espace intérieur et l'atmosphère est immédiate.

3. Engrenage selon les revendications 1 ou 2, **caractérisé en ce que** la douche d'huile (10) dans la zone de l'entrée (4.1) et/ou de la sortie (4.2) est pourvue d'une buse pour acheminer du lubrifiant vers les dents.

4. Engrenage selon l'une des revendications 1 à 3, **caractérisé en ce que** la paroi enveloppante (6) se compose de matériau synthétique ou de métal.

5. Engrenage selon la revendication 1, **caractérisé en ce que** la sortie d'huile (3.1) est sans pression.

6. Engrenage selon l'une des revendications 1 à 5, **caractérisé en ce que** les roues dentées sont pourvues d'une double denture oblique.

7. Engrenage selon l'une des revendications 1 à 5, **caractérisé en ce qu'**un joint (5) est prévu entre l'entrée (4.1) et la sortie (4.2) dans l'espace intérieur.

8. Engrenage selon la revendication 6, **caractérisé en ce que** le joint (5) est un joint-brosse.

9. Engrenage selon la revendication 1, **caractérisé en ce que** la paroi enveloppante (6) dispose de canaux de refroi- dissement traversés par le fluide d'un circuit de refroidissement pour évacuer la chaleur.

10. Engrenage selon la revendication 9, **caractérisé en ce que** le fluide est de l'eau.

11. Engrenage selon la revendication 1, **caractérisé en ce que** l'espace intérieur est mis en dépression.
